# EUROPÄISCHE PATENTSCHRIFT

(11) **EP 3 741 580 B1**
(45) Veröffentlichungstag und Bekanntmachung des Hinweises auf die Patenterteilung: **13.04.2022**
(21) Anmeldenummer: 20173996.8
(22) Anmeldetag: 11.05.2020
(51) Int. Cl.: B42D 25/30, B42D 25/305, B42D 25/455, B42D 25/46, B42D 25/475, G06K 19/06, B42D 25/45, G06K 19/077

(54) **WERT- ODER SICHERHEITSDOKUMENT SOWIE VERFAHREN ZU DESSEN HERSTELLUNG**
VALUABLE OR SECURITY DOCUMENT AND METHOD FOR ITS PRODUCTION
DOCUMENT DE VALEUR OU DE SÉCURITÉ AINSI QUE SON PROCÉDÉ DE FABRICATION

(30) Priorität: 21.05.2019 DE 102019113569
(43) Veröffentlichungstag der Anmeldung: 25.11.2020
(73) Patentinhaber: Bundesdruckerei GmbH, 10969 Berlin (DE)
(72) Erfinder: FERBER, Alexander, 12103 Berlin (DE); KLOESER, Joachim, 10779 Berlin (DE); BAUDACH, Steffen, 13189 Berlin (DE)
(74) Vertreter: Hentrich Patent- & Rechtsanwälte PartG mbB

(56) Entgegenhaltungen:
- WO-A1-2014/035757
- FR-A1- 2 840 094
- JP-A- H10 124 643

## Beschreibung

Die vorliegende Erfindung betrifft ein Wert- oder Sicherheitsdokument, insbesondere in Kartenformat, mit einer eine Unterseite bildenden Trägerschicht, mit einer eine Oberseite bildenden Deckschicht, sowie mit mindestens einer aus den in einer Stapelrichtung gestapelten Schichten gebildeten Kante, an welcher mindestens ein Sicherheitsmerkmal angeordnet oder ausgebildet ist. Die Erfindung betrifft darüber hinaus ein Verfahren zur Herstellung eines solchen Wert- oder Sicherheitsdokuments.

Wert- oder Sicherheitsdokumente dienen beispielsweise dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Hierzu ist sicherzustellen, dass das Wert- oder Sicherheitsdokument nicht oder nur mit erheblichem Aufwand imitiert, gefälscht oder verfälscht werden kann. Das Dokument enthält vorliegend mindestens ein an der Kante ausgebildetes Sicherheitsmerkmal, dessen Nachahmung äußerst schwierig oder sogar praktisch unmöglich ist. Beispielsweise besteht das Dokument, analog zu Banknoten, aus einem nicht ohne weiteres verfügbaren Material. Zusätzlich oder alternativ können Sicherheitsmerkmale durch spezielle Farben, beispielsweise lumineszierende oder optisch variable Farben, optische Elemente, wie Hologramme, Kippbilder, Kinegramme, Linsen- oder Prismenarrays, ferner Guillochen, Melierfasern, Sicherheitsfäden und andere gebildet sein. Des Weiteren kann es auch erforderlich sein, dass die Wert- oder Sicherheitsdokumente einfach herstellbar sind und dass sie von sehbehinderten Personen erfasst werden können.

Die DE 10 2008 030 182 A1 beschreibt ein Wert- oder Sicherheitsdokument mit dem Merkmalsbestand des Oberbegriffs des Anspruchs 1. Dieses umfasst ein Sicherheitsmerkmal, welches nach der Lamination der einzelnen Dokumentenlagen auf die Kante aufgebracht wird. Auch in der WO 2005/043 456 A1 ist ein Wert- oder Sicherheitsdokument mit einem nachträglich auf die Kante aufgebrachten Sicherheitsmerkmal beschrieben. Die in diesen Druckschriften beschriebenen Wert- oder Sicherheitsdokumente sind sehr aufwändig in der Herstellung, da hierbei spezielle Druckvorrichtungen zur Bedruckung der oftmals sehr schmalen Kante Einsatz finden.

Die FR 2 840 094 A1 beschreibt eine Identitäts- oder Kreditkarte, die ein Sicherheitsmerkmal an ihrer Kartenkante aufweist, welches durch fluoreszierende Zonen für UV-Licht und nicht-fluoreszierenden Zonen an einer Zwischenschicht gebildet ist. Dabei kommen die nicht-fluoreszierenden Zonen durch Aussparungen an der Kartenkante zustande. Sie bilden dann mit den fluoreszierenden Zonen ein individualisiertes Sicherheitsmerkmal der Karte.

Die JP H10 124 643 A beschreibt den Aufbau einer Wertkarte, die in einem Pachinko-Automat Einsatz finden soll. Diese Wertkarte für das Automatenspiel weist mehrere Sicherheitsmerkmale auf, die sich an der Kartenkante befinden können.

Die WO 2014 / 035 757 A1 beschreibt eine laminiertes Sicherheitsdokument, welches Sicherheitselemente aufweist, die an der seitlichen Kante des Laminats sichtbar sind. Der Aufbau des laminierten Sicherheitsdokuments bildet dabei einen Lichtleiter, so dass das Licht auf der einen seitlichen Kante eingekoppelt, innerhalb des Kartenkörpers einer Totalreflexion unterliegt, und anschließend an der anderen Kante des Karte wieder austritt; wenn ein unverfälschtes Sicherheitsdokument vorliegt. Bei der Herstellung dieser Sicherheitsdokumente liegt zunächst ein Bogen vor, in welchen die einzelnen Bestandteile der Sicherheitselemente an der Kartenkante vorliegen, und die erst beim Beschnitt freigelegt werden.

Es ist daher die Aufgabe der vorliegenden Erfindung, ein schneller herzustellendes Wert- oder Sicherheitsdokument sowie ein schneller durchzuführendes Verfahren zu dessen Herstellung anzugeben.

Die vorstehenden Aufgaben werden mit einem Wert- oder Sicherheitsdokument mit dem Merkmalsbestand des Anspruchs 1 sowie mit einem Verfahren mit dem Merkmalsbestand des Anspruchs 6 gelöst. Vorteilhafte Ausgestaltungen mit zweckmäßigen Weiterbildungen der Erfindung sind in den abhängigen Ansprüchen angegeben.

Das erfindungsgemäße Wert- oder Sicherheitsdokument zeichnet sich insbesondere dadurch aus, dass das an der Kante erfassbare Sicherheitsmerkmal aus einer sich zumindest abschnittsweise bis an die Kante erstreckenden, zwischen die Trägerschicht und die Deckschicht eingebrachten Beschichtung gebildet ist.

In diesem Zusammenhang ist die Möglichkeit gegeben, dass ein sogenanntes "Level-1"-Sicherheitsmerkmal an der Kante des Wert- oder Sicherheitsdokuments vorhanden ist, welches ohne technische Hilfsmittel von einem Menschen erfassbar und/oder überprüfbar ist. Vorzugsweise ist dabei das mindestens eine Sicherheitsmerkmal an der Kante zumindest abschnittsweise derart ausgebildet, dass es mit dem menschlichen Auge erfassbar ist.

Außerdem besteht die Möglichkeit, dass ein sogenanntes "Level-2"-Sicherheitsmerkmal an der Kante des Wert- oder Sicherheitsdokuments vorliegt, welches entweder mit einem einfachen Hilfsmittel, wie einer Lupe, einer UV-Lampe oder einem Filter zu erkennen ist, oder welches spezielle Kenntnisse und Hilfsmittel, wie Infrarotkameras, Verifikationsgeräte oder Laser zur Erfassung des Sicherheitsmerkmals erfordert.

Zudem kann das Sicherheitsmerkmal in der Kante als ein sogenanntes "Level-3"-Sicherheitsmerkmal gebildet sein, welches insbesondere derart ausgebildet ist, zumindest abschnittsweise angeregt und/oder spektroskopisch erfasst zu werden. Zur Erfassung des als "Level-3"-Sicherheitsmerkmal gebildeten Sicherheitsmerkmal sind detaillierte Kenntnisse erforderlich, womit es nur mit spezieller Laborausstattung oder Sensoren wie einem Mikroskop, einem Spektrometer oder einem Röntgengerät erkennbar und prüfbar ist. Hierzu kann die Beschichtung aus einer speziellen Farbe, beispielsweise einer lumineszierenden oder optisch variablen Farbe gebildet sein. Alternativ oder ergänzend umfasst die Beschichtung ein dotiertes Material, welches mit einem Spektrometer erfassbar ist. Alternativ oder ergänzend umfasst die Beschichtung ein magnetisches oder magnetisierbares Material oder ist aus einem solchem gebildet, womit ein magnetisch auslesbares Sicherheitsmerkmal an der Kante des Wert- oder Sicherheitsdokuments vorliegt. In einer vorteilhaften Weitergestaltung ist dabei die Magnetisierung von den Bereichen des Sicherheitsmerkmals derart gewählt, dass eine Art "magnetischer Code", insbesondere ein Barcode entsteht. Dieser kann zur Verifikation des Wert- oder Sicherheitsdokuments ausgelesen werden.

Die erfindungsgemäße Art der Anbringung oder Einbringung des Sicherheitsmerkmals erleichtert die Herstellung, da auf aufwändige Druckvorrichtungen zur isolierten Bedruckung der Kante verzichtet werden kann. Zusätzlich liegt eine zuverlässige Absicherung der Kartenkante eines aus mehreren Schichten gebildeten Laminationsverbunds des Wert- oder Sicherheitsdokuments vor.

Das vorliegende Wert- oder Sicherheitsdokument liegt beispielsweise in Form eines Reisepasses, in Form eines Personalausweises, in Form eines Führerscheines oder in Form einer anderen ID-Karte vor. Das Wert- oder Sicherheitsdokument kann auch ein Zugangskontrollausweis, ein Fahrzeugschein, ein Fahrzeugbrief, ein Visum, ein Scheck, oder auch eine Scheck-, eine Bank-, eine Kredit- oder eine Barzahlungskarte, eine Kundenkarte, eine Gesundheitskarte, eine Chipkarte sein. Zudem kann das Wert- oder Sicherheitsdokument ein Firmenausweis, ein Berechtigungsnachweis, ein Mitgliedsausweis oder ein anderes ID-Dokument sein, wobei gewährleistet sein sollte, dass dieses über eine Kante verfügt, an welcher mindestens ein Sicherheitsmerkmal angebracht oder in die Kante eingebracht ist.

Vorzugsweise liegt das Wert- oder Sicherheitsdokument in ID 1-, ID 2-, ID 3- oder in irgendeinem anderen Format vor, beispielsweise in Heftform, wie bei einem passähnlichen Gegenstand. Das Wert- oder Sicherheitsdokument ist im Allgemeinen ein Laminat aus mehreren Dokumentenlagen, die unter Wärmeeinwirkung und unter erhöhtem Druck flächig miteinander verbunden sind. Diese Wert- oder Sicherheitsdokumente sollen den normierten Anforderungen genügen, beispielsweise der ISO 10373 (Stand: 2011), der ISO/IEC 7810 (Stand: 2003) oder der ISO 14443 (Stand: 2018).

Vorzugsweise bestehen die Dokumentlagen aus der Trägerschicht, einer oder mehrerer Zwischenschichten sowie der Deckschicht, wobei diese mit einem Material gebildet sind, das sich für eine Lamination eignet. Das Wert- oder Sicherheitsdokument kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Dokument auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt des Dokuments aufgebracht werden, wie einen Schutz- oder Decklack. Bevorzugt wird das Dokument aus drei bis zwölf, vorzugsweise vier bis zehn Folien, hergestellt. Die Folien können ferner Druckschichten tragen. Ein solcherart gebildetes Laminat kann abschließend auch ein- oder beidseitig mit einem Schutz- oder Decklack oder mit einer Schutzfolie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen verleihen dem Dokument zusätzlich die erforderliche Abriebfestigkeit.

Soweit in der Beschreibung und in den Ansprüchen der vorliegenden Anmeldung der Begriff "Muster" genannt wird, ist darunter eine irgendwie gestaltete Verteilung von erfassbaren, insbesondere sichtbaren und/oder einen taktilen Eindruck vermittelnden Elementen auf einer oder mehreren Oberflächen oder Kanten, zu verstehen. Vorzugsweise ergeben diese Elemente ein Zeichen, ein Symbol, ein Wappen, eine Linie, eine Formel oder dergleichen.

Das Wert- oder Sicherheitsdokument kann sich beispielsweise dadurch auszeichnen, dass das mindestens eine Sicherheitsmerkmal an zumindest einer seiner Kanten, vorzugsweise auch an mehreren oder an allen seiner Kanten, zumindest abschnittsweise ein regelmäßiges Muster umfasst. Das regelmäßige Muster liegt dabei vorzugsweise in maschinenlesbarer Form vor.

Alternativ oder ergänzend ist es möglich, dass das mindestens eine Sicherheitsmerkmal an zumindest einer der Kanten des Wert- oder Sicherheitsdokuments als zumindest abschnittsweise kodiertes Muster vorliegt. Unter "kodiert" ist dabei ein Muster zu verstehen, das beispielsweise in Form eines Barcodes, oder in Form von anders gearteter, insbesondere verschlüsselter, Daten vorliegt. Diese Daten können beispielsweise personen- und/oder dokumentenspezifischen Daten oder Informationen sein. Diese sind vorzugsweise mit anderen an dem Wert- oder Sicherheitsdokument angebrachten Daten oder Informationen vergleichbar, so dass beispielsweise die Echtheit des Wert- oder Sicherheitsdokuments verifizierbar ist. Der Code des kodierten Musters liegt dabei vorzugsweise in maschinenlesbarer Form vor.

Die Beschichtung kann dabei derart ausgebildet sein, dass sich das mindestens eine Muster des Sicherheitsmerkmals über eine Kantenbreite des Wert- oder Sicherheitsdokuments von 20 Mikrometern (µm) bis hin zu 1000 Mikrometern erstreckt. In Stapelrichtung ergibt sich beispielsweise eine Dicke der Beschichtung für das Sicherheitsmerkmal von 1 Mikrometer bis hin zu 50 Mikrometern. Eine Eindringtiefe des Sicherheitsmerkmals in den Verbund des Wert- oder Sicherheitsdokument in einer Richtung senkrecht bezüglich der Stapelrichtung kann beispielsweise von 100 Mikrometern bis hin zu 5 Millimeter (mm) bertragen.

Das Sicherheitsmerkmal weist vorzugsweise einen Bereich mit niedrigem Sicherheitsgrad ("Level-1") in einer Richtung senkrecht bezüglich der Stapelrichtung der Schichten auf. Das Sicherheitsmerkmal ist aber bei einer Betrachtung in oder entgegen der Stapelrichtung des Wert- oder Sicherheitsdokuments nicht ohne Hilfsmittel zu erkennen. Das Sicherheitsmerkmal weist also mit anderen Worten einen gegenüber dem Bereich mit niedrigem Sicherheitsgrad stärker gesicherten Bereich mit hohem Sicherheitsgrad ("Level-2" oder "Level-3") in einer Richtung in oder entgegen der Stapelrichtung auf. Dies erhöht die Fälschungssicherheit.

Ein noch sichereres Wert- oder Sicherheitsdokument ist dadurch gekennzeichnet, dass das mindestens eine Sicherheitsmerkmal ausgebildet ist, durch Bestrahlung der Unterseite und/oder der Oberseite mittels Röntgenstrahlen erfasst und/oder überprüft zu werden. Somit liegt also nicht nur an der Kante des Wert- oder Sicherheitsdokuments ein zu erfassendes und/oder zu überprüfendes Muster des Sicherheitsmerkmals vor, sondern auch in Stapellängsrichtung, wobei das Sicherheitsmerkmal ebenfalls ein regelmäßiges oder kodiertes Muster in einer zwischen der Trägerschicht und der Deckschicht liegenden Ebene aufweist, das lediglich mittels Röntgenstrahlen detektierbar ist. Dieses Sicherheitsmerkmal ist daher ein kombiniertes Sicherheitsmerkmal mit einem "Level-1"-Muster an der Kante und einem "Level-3"-Muster im Bereich kantenabseits zwischen der Trägerschicht und der Deckschicht.

In einer anderen Ausgestaltung ist das Wert- oder Sicherheitsprodukt, insbesondere dessen Dokumentenlagen, derart gebildet, dass das Sicherheitsmerkmal erkennbar und/oder überprüfbar ist, wenn die Oberseite und/oder die Unterseite mit Lichtstrahlen aus dem Spektrum des sichtbaren Lichts bestrahlt, insbesondere mit Lichtstrahlen aus dem Spektrum des sichtbaren Lichts durchleuchtet wird. Die Erfassung und/oder Überprüfung des Wert- oder Sicherheitsdokuments erfolgt dann beispielsweise mittels eines optischen Erfassens der unbeleuchteten Seite des Wert- oder Sicherheitsdokuments.

Bei geeigneter Dimensionierung des Sicherheitsmerkmals weist dieses die weitere vorteilhafte Eigenschaft auf, eine Delamination der einzelnen Schichten des Wert- oder Sicherheitsdokuments zu mindern oder sogar gänzlich zu verhindern. In diesem Falle kann es beispielsweise, insbesondere beim Verpressen und/oder Laminieren der Schichten adhäsive Eigenschaften bereitstellen, welche zu einem verstärkten Verbund der Schichten führt.

Die Beschichtung kann mittels einer Druckeinrichtung gedruckt sein oder werden, wobei die Beschichtung in eine oder auf eine Zwischenschicht, insbesondere auf ein Inlay, zwischen der Trägerschicht und der Deckschicht eingebracht oder aufgebracht ist.

Die Beschichtung des Sicherheitsmerkmals weist ein elektrisch leitfähiges Material auf, welches beispielsweise als eine Silberpaste, als eine Kupferpaste oder als eine andere geeignete elektrisch leitfähige Legierung gebildet ist. Hierzu kann mittels der Druckeinrichtung ein geeignetes elektrisches Material aufgedruckt werden. Alternativ kann die Druckeinrichtung zum Drucken des Beschichtung des Sicherheitsmerkmals aber auch als ein Inkjet-Drucker gebildet sein, der ausgebildet ist, eine Flüssigtinte (umgangssprachlich eine "jetbare" Tinte) auf die dazwischenliegende Zwischenschicht aufzudrucken.

Die Druckeinrichtung kann aber auch als eine Digitaldruckeinrichtung gebildet sein. Alternativ ist die Möglichkeit eröffnet, dass die Druckeinrichtung die Beschichtung und/oder die Antennenspule im Siebdruckverfahren aufbringt.

Zudem kann für das Aufdrucken der Beschichtung des Sicherheitsmerkmals eine Tintenzusammensetzung gewählt werden, die auf demselben Material wie eine der Schichten des Wert- oder Sicherheitsdokuments beruht, so dass der Aufdruck der Tinte für die Beschichtung auf die Trägerschicht, auf die Deckschicht oder auf eine Zwischenschicht dazu führt, dass ein monolithischer Schichtaufbau mit dieser Tinte gebildet wird. Die mit der Tinte beschichtete Lage oder Schicht ist dabei vorzugsweise aus einem Polycarbonat gebildet, wobei die entsprechende Tinte für die Beschichtung ebenfalls auf Polycarbonat basiert.

Erfindungsgemäß ist die Beschichtung in eine oder auf eine Zwischenschicht zwischen der Trägerschicht und der Deckschicht eingebracht oder aufgebracht, in welcher oder auf welcher eine Antennenspule vorliegt. Erfindungsgemäß besteht die Antennenspule aus demselben Material wie die Beschichtung. Die Antennenspule ist dabei selbst mit einem elektrisch leitfähigen Material, vorzugsweise einer Silberpaste gebildet, mithin gedruckt, so dass sich aufgrund der identischen Materialwahl für die Beschichtung und für die Antennenspule eine deutliche Zeitersparnis bei der Herstellung des Wert- oder Sicherheitsdokuments ergibt. Zur Herstellung der Antennenspule und zur Ausbildung der Beschichtung kann dann nämlich dieselbe Druckeinrichtung Einsatz finden. Es besteht außerdem die Möglichkeit der Bedruckung einer Zwischenschicht oder der Trägerschicht mit einer Steuermarke, die aus einer, insbesondere UV-trocknenden Farbe gebildet ist. Auch hier kann in einem einzigen Druckschritt mit derselben Druckeinrichtung ein entsprechendes, ggfs. zusätzliches, Sicherheitsmerkmal aufgebracht werden, welches nach dem Ablängen sichtbar wird.

Das Verfahren zur Herstellung des Wert- oder Sicherheitsdokuments zeichnet sich insbesondere durch die folgenden Schritte aus:
A) Bereitstellen einer eine Unterseite bildenden Trägerschicht,
B) Bereitstellen einer eine Oberseite bildenden Deckschicht,
C) Aufbringen oder Einbringen einer Beschichtung für mindestens ein Sicherheitsmerkmal zwischen die Trägerschicht und die Deckschicht, wobei die das Sicherheitsmerkmal bildende Beschichtung in eine oder auf eine Zwischenschicht zwischen der Trägerschicht und der Deckschicht aufgebracht oder eingebracht wird, wobei in der oder auf der Zwischenschicht eine Antennenspule aufgebracht wird oder wurde, wobei die Antennenspule aus demselben Material wie die Beschichtung besteht, und wobei die Antennenspule in zusammen mit der Beschichtung gedruckt wird,
D) Herausbilden des sich bis an mindestens eine Kante des Wert- oder Sicherheitsdokuments erstreckenden und an der Kante erfassbaren Sicherheitsmerkmals durch Ablängen der in einer Stapelrichtung gestapelten und/oder laminierten Schichten auf ein vorgegebenes oder vorgebbares Endmaß des Wert- oder Sicherheitsdokuments.

Die im Zusammenhang mit dem Wert- oder Sicherheitsdokument erwähnten Vorteile und alternativen Ausgestaltungen gelten auch für das erfindungsgemäße Verfahren. Die Beschichtung für das Sicherheitsmerkmals wird dabei vorzugsweise nicht vollflächig auf eine der Schichten aufgetragen, um ein vorgegebenes Muster an der Kante hervorzurufen.

Es hat sich als sinnvoll herausgestellt, wenn das Sicherheitsmerkmal herausgebildet wird durch ein Stanzen der Schichten auf das Endmaß, wodurch das Sicherheitsmerkmal an der Kante freigelegt wird. Hierzu findet eine geeignete Stanzeinrichtung Einsatz. Somit besteht die Möglichkeit, die Beschichtung auf die Zwischenschicht aufzubringen wobei das Sicherheitsmerkmal erst beim Ausstanzen der Karte auf das Endmaß freigelegt und sichtbar oder detektierbar wird.

Sowohl die Antennenspule als auch die Beschichtung sind aus demselben Material, vorzugsweise einem druckfähigen Material gebildet. Vorzugsweise handelt es sich bei diesem Material um eine Silberpaste.

In diesem Zusammenhang ist es ferner möglich, dass die Antennenspule und die das Sicherheitsmerkmal bildende Beschichtung mittels einer Druckeinrichtung gedruckt werden, bevor die Schichten laminiert und auf Endmaß abgelängt, mithin gestanzt werden.

Vorzugsweise werden die Beschichtung des Sicherheitsmerkmal und die Antennenspule, im Inkjet-Druckverfahren aufgebracht. Alternativ ist die Möglichkeit gegeben, dass die Beschichtung des Sicherheitsmerkmal und die Antennenspule im Digitaldruckverfahren aufgebracht werden. Außerdem ist es möglich, dass die Beschichtung und die Antennenspule im Siebdruckverfahren aufgedruckt werden.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine schematische isometrische Darstellung eines Wert- oder Sicherheitsdokuments in Form einer Identitätskarte;
- Figur 2: eine schematische Schnittansicht durch eine weitere Identitätskarte entsprechend der Schnittlinie I-I aus Figur 1;
- Figur 3: eine schematische Draufsicht auf eine der Zwischenschichten aufgebrachte Beschichtung, wobei zugleich eine Antennenspule aufgebracht ist, vor dem Stanzvorgang auf das Endmaß des Wert- oder Sicherheitsdokuments;
- Figur 4a: eine schematische Seitenansicht auf die Kante eines laminierten Wert- oder Sicherheitsdokuments mit einem ein regelmäßiges Muster aufweisenden Sicherheitsmerkmal;
- Figur 4b: eine schematische Seitenansicht auf die Kante eines laminierten Wert- oder Sicherheitsdokuments mit einem ein kodiertes Muster aufweisenden Sicherheitsmerkmal; und
- Figur 5: eine durchleuchtete Ansicht des auf ein Endmaß gestanzten Wert- oder Sicherheitsdokuments nach Figur 3; diese Ansicht entspricht auch einer Röntgenaufnahme eines aus Richtung der Unterseite und/oder aus Richtung der Oberseite mittels Röntgenstrahlen durchleuchteten Wert- oder Sicherheitsdokuments nach Figur 3.

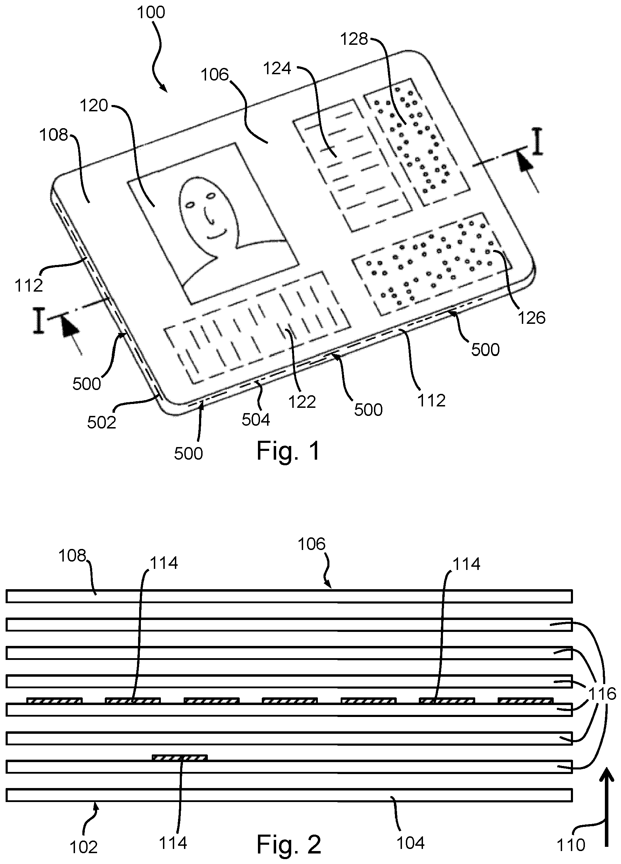

In Figur 1 ist ein Wert- oder Sicherheitsdokument 100 mit Kanten 112 gezeigt, an welchen vorliegend mehrere Sicherheitsmerkmale 500 angebracht oder eingebracht sind. Das Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte, mithin an einem kartenförmigen Wert- oder Sicherheitsdokument 100 beschrieben.

In den Figuren 1 und 2 ist das Wert- oder Sicherheitsdokument 100 in Form einer Identitätskarte dargestellt, die beispielsweise als Laminat aus einer Trägerschicht 104, mehreren innenliegenden Zwischenschichten 116 und einer Deckschicht 108 zusammengefügt worden ist. Beispielsweise können die Schichten als Polymerlagen aus PC und/oder PET gebildet sein. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann.

Das Wert- oder Sicherheitsdokument 100 weist vorliegend eine Oberseite 106 und eine Unterseite 102 auf. Auf der Oberseite 106 befinden sich ein Gesichts- oder Portraitbild 120 des Inhabers der Karte sowie vier Datenfelder, nämlich ein erstes Datenfeld 122, ein zweites Datenfeld 124 mit Karten- und Inhaberdaten in Klarschrift sowie ein drittes Datenfeld 126 und ein viertes Datenfeld 128 mit den Karten- und Inhaberdaten, die beispielsweise in Blindenschrift, mithin in Braille-Schrift vorliegen. Die Daten im ersten und im zweiten Datenfeld 122, 124 sind beispielsweise durch Druckschichten hergestellt, die vorzugsweise auf einer äußeren Lage des Dokuments, aber unmittelbar unter der außenliegenden Deckschicht 108, liegen.

In Figur 2 sind nur zur Veranschaulichung die vor dem Laminieren noch vereinzelten, aber bereits in einer Stapelrichtung 110 angeordneten Lagen sichtbar dargestellt. Im fertigen Laminat sind die Grenzflächen nicht mehr sichtbar. Die äußeren Schichten 104, 108 der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack ist vorzugsweise transparent, sodass darunter liegende Informationen von außen sichtbar sind. Insbesondere bleiben dabei aber eine oder mehreren Zwischenschichten 116, bspw. die Zwischenschicht 116 eines gedruckten Portraitbilds 120 sichtbar, die vorzugsweise unmittelbar neben oder hinter einer der äußeren Schichten 104, 108 angeordnet ist bzw. angeordnet sind. Es ist außerdem ersichtlich, dass eine Beschichtung 114 für die an der Kante 112 erfassbare Sicherheitsmerkmale 500 auf eine innenliegende Zwischenschicht 116 aufgebracht wurde, bevor die einzelnen Schichten 104, 108, 116 laminiert, mithin miteinander verschmolzen werden. Zudem ist die Möglichkeit eröffnet, dass eine weitere Beschichtung 114 eines Sicherheitsmerkmals 500 auf eine andere der Zwischenschichten 116 aufgebracht wurde, so dass sich eine in Bezug auf eine Stapelrichtung 110 andere Höhenlage an der Kante 112 für dieses weitere Sicherheitsmerkmal 500 ergibt.

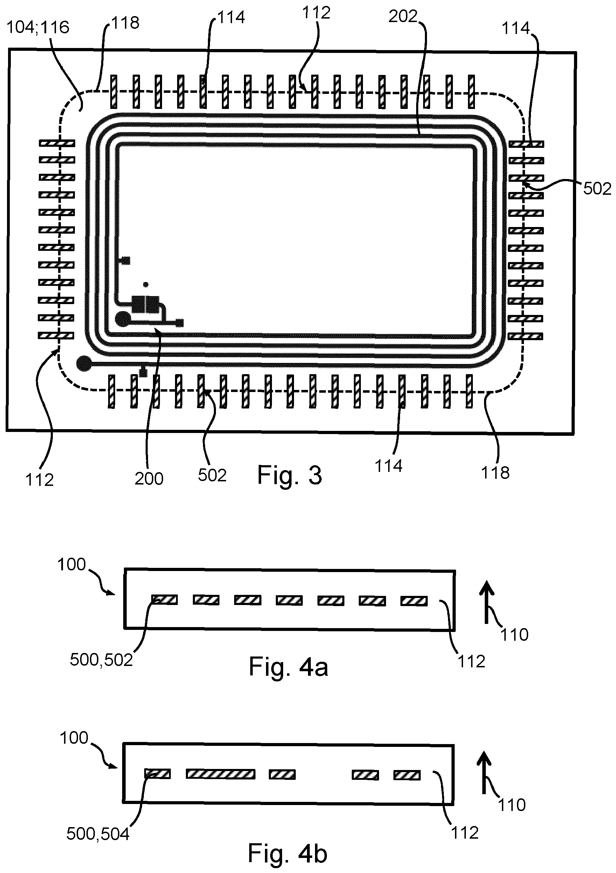

In Figur 3 ist ein noch nicht auf ein Endmaß 118 geschnittenes oder gestanztes Wert- oder Sicherheitsdokument 100 mit Blick auf den Rohkörper der Trägerschicht 104 oder auf eine der Zwischenschichten 116 gezeigt. Die Deckschicht 108 ist hierbei noch nicht aufgebracht. Auf der gleichen, senkrecht bezüglich der Stapelrichtung 110 orientierten Lage oder Ebene der Beschichtung 114 für das Sicherheitsmerkmals 500 ist vorliegend zusätzlich eine Antennenspule 202 einer Sende- und/oder Empfangseinrichtung 200 vorhanden, die ebenfalls in das Wert- oder Sicherheitsdokument 100 integriert wird. Die Antennenspule 202 ist mittels einer Druckeinrichtung aufgedruckt, wobei die Antennenspule 202 vorliegend eine Silberpaste umfasst oder aus einer solchen besteht. Außerdem ist die Beschichtung 114 auf die Trägerschicht 104 bzw. die Zwischenschicht 116 aufgetragen, welche das Sicherheitsmerkmal 500 des Wert- oder Sicherheitsdokuments 100 bildet. Die Beschichtung 114 ist vorliegend ebenfalls mittels einer Druckeinrichtung gedruckt. Es handelt sich dabei um dieselbe Druckeinrichtung wie diejenige, mit welcher die Antennenspule 202 aufgedruckt ist oder erst noch aufgedruckt wird. Somit umfasst die Beschichtung 114 vorliegend ebenfalls eine Silberpaste oder besteht aus einer solchen. Aufgrund der identischen Materialwahl und aufgrund des Einsatzes von nur einer einzigen Druckeinrichtung lässt sich die Zeit für die Herstellung (Durchlauf- oder Taktzeit) des Wert- oder Sicherheitsdokuments 100 deutlich reduzieren. Die Beschichtung 500 und die Antennenspule 202 lassen sich in einem einzigen Arbeitsschritt auf die Trägerschicht 104, auf die Deckschicht 108, auf eine Zwischenschicht 116 oder auf ein Inlay aufdrucken. Lediglich beispielhaft sei als Zwischenschicht 116 eine flexible Leiterplatte auf Basis von Polyimid (PI) genannt, welche unter anderem die Antennenspule 202 trägt. Die übrigen Schichten sind beispielsweise auf Basis eines fachüblichen thermoplastischen Polymers gewählt, insbesondere aus einem Polycarbonat.

Auf die in Figur 3 gezeigte, mit der Antennenspule 202 und der Beschichtung 114 des Sicherheitsmerkmals 500 versehene Zwischenschicht 116 werden nun entweder weitere Zwischenschichten 116 oder die Deckschicht 108 aufgelegt und anschließend laminiert. Der gestrichelt gekennzeichnete Bereich, beschreibt ein Endmaß 118 des Wert- oder Sicherheitsprodukts 100, welches vorliegend rechteckig mit abgerundeten Ecken geformt ist, so dass später vier Kanten 112 entstehen, an denen jeweils eines der Sicherheitsmerkmale 500 entsteht, welches vorliegend aus einem regelmäßig angeordneten Muster 502 aus Streifen gebildet ist. Der so entstandene Block aus Einzelschichten wird dann auf das Endmaß 118 geschnitten, mithin gestanzt, wodurch das streifenförmige Muster 502 an den so entstehenden Kanten 112 erfassbar, insbesondere sichtbar wird.

Das an einer der Kanten 112 ausgebildete regelmäßige Muster 502 ist beispielsweise anhand der Seitenansicht nach Figur 4a zu erkennen. Figur 4b zeigt eine alternative Ausgestaltung des Sicherheitsmerkmals 500, welches dort als ein kodiertes Muster 504 an der Kante 112 vorliegt. Dieses kodierte Muster 504 kann beispielsweise einen Barcode darstellen. Zudem kann eine Kodierung dadurch entstehen, dass die Muster 502, 504 in vordefiniertem Abstand von der Oberseite 106 und/oder von der Unterseite 102 beabstandet sind, so dass auch dieser Abstand als Teil des Sicherheitsmerkmals 500 gewertet werden kann. Etwaig abgelöste einzelne Schichten des Wert- oder Sicherheitsdokuments 100 führen zu einem verringerten Abstand gegenüber dem entsprechenden Abstand bei einem unmanipulierten Wert- oder Sicherheitsdokument 100. Umgekehrt ist ein gegenüber einem Abstand eines unmanipulierten Wert- oder Sicherheitsdokuments 100 vergrößerter Abstand zu erfassen, wenn dem Verbund einzelne Schichten hinzugefügt wurden.

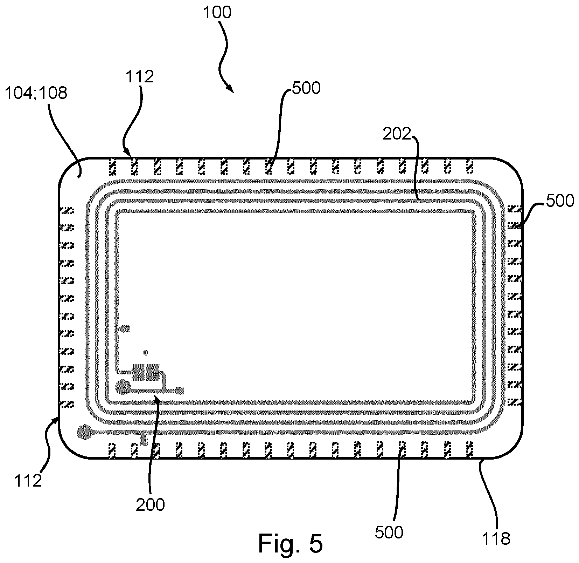

In Figur 5 ist eine weitere Besonderheit des erfindungsgemäßen Sicherheitsmerkmals 500 zu erkennen, welche ein Röntgenbild des Wert- oder Sicherheitsdokuments 100 oder auch ein durchleuchtetes Wert- oder Sicherheitsdokument 100 zeigt. Wie vorstehend bereits erörtert wurde, kann das an der Kante 112 vorhandene Muster 502, 504 beispielsweise ohne technische Hilfsmittel erfasst und überprüft werden. Das Sicherheitsmerkmal 500 weist also mit anderen Worten einen Bereich mit niedrigem Sicherheitsgrad ("Level-1") in einer Richtung senkrecht bezüglich der Stapelrichtung 110 auf. Das Sicherheitsmerkmal 500 ist aber bei einer Betrachtung in oder entgegen der Stapelrichtung 110 des Wert- oder Sicherheitsdokuments 100 nicht ohne Hilfsmittel zu erkennen. Das Sicherheitsmerkmal 500 weist also mit anderen Worten einen gegenüber dem Bereich mit niedrigem Sicherheitsgrad stärker gesicherten Bereich mit hohem Sicherheitsgrad ("Level-2" oder "Level-3") in einer Richtung in oder entgegen der Stapelrichtung 110 auf. Um den Bereich mit hohem Sicherheitsgrad einsehen zu können, wird vorliegend eine Röntgeneinrichtung benötigt, um das Sicherheitsmerkmal 500 abseits der Kante 112 erfassen und gegebenenfalls überprüfen zu können.

Mit dem erfindungsgemäßen Wert- oder Sicherheitsdokument 100 und dem erfindungsgemäßen Verfahren ist also eine zusätzliche Absicherung der Kartenkante ermöglicht, wobei zudem eine vereinfachte Herstellung vorliegt, bei Ausbildung der Antennenspule 202 der Sende- und/oder Empfangseinrichtung 200 in einem gemeinsamen Arbeitsschritt mit der Anbringung der Beschichtung 114 des Sicherheitsmerkmals 500. Aufgrund des erst nachträglichen Freilegens der Kanten 112 durch einen Stanzvorgang wird das Sicherheitsmerkmal 500 an der Kante 112 detektierbar oder sichtbar. Zugleich liegt aber nach dem Stanzen noch ein in der Kartenebene ausgebildetes Muster der Beschichtung 114 vor, so dass die Fälschungssicherheit des so entstandenen Sicherheitsmerkmals 500 erhöht ist.

### BEZUGSZEICHENLISTE

- 100: Wert- oder Sicherheitsdokument
- 102: untere Substratoberfläche, untere Kartenoberfläche, Unterseite
- 104: Trägerschicht
- 106: obere Substratoberfläche, obere Kartenoberfläche, Oberseite
- 108: Deckschicht
- 110: Stapelrichtung
- 112: Kante
- 114: Beschichtung
- 116: Zwischenschicht (innenliegend)
- 118: Endmaß
- 120: Portraitbild
- 122: erstes Datenfeld
- 124: zweites Datenfeld
- 126: drittes Datenfeld
- 128: viertes Datenfeld
- 200: Sende- und/oder Empfangseinrichtung
- 202: Antennenspule
- 500: Sicherheitsmerkmal
- 502: Muster, regelmäßig
- 504: Muster, kodiert

## Patentansprüche

1. Wert- oder Sicherheitsdokument (100) mit einer eine Unterseite (102) bildenden Trägerschicht (104), mit einer eine Oberseite (106) bildenden Deckschicht (108), sowie mit mindestens einer aus den in einer Stapelrichtung (110) gestapelten Schichten (104, 108) gebildeten Kante (112), an welcher mindestens ein Sicherheitsmerkmal (500) angeordnet oder ausgebildet ist, wobei das an der Kante (112) erfassbare Sicherheitsmerkmal (500) aus einer sich zumindest abschnittsweise bis an die Kante (112) erstreckenden, zwischen die Trägerschicht (104) und die Deckschicht (108) eingebrachten Beschichtung (114) gebildet ist,
wobei die Beschichtung (114) in eine oder auf eine Zwischenschicht (116) zwischen der Trägerschicht (104) und der Deckschicht (108) eingebracht oder aufgebracht ist, in welcher oder auf welcher eine Antennenspule (202) vorliegt, **dadurch gekennzeichnet, dass** die Antennenspule (202) aus demselben Material wie die Beschichtung (114) besteht.

2. Wert- oder Sicherheitsdokument (100) nach Anspruch 1, **dadurch gekennzeichnet, dass** das Sicherheitsmerkmal (500) an der Kante (112) zumindest abschnittsweise ein regelmäßiges Muster (502) umfasst.

3. Wert- oder Sicherheitsdokument (100) nach Anspruch 1 oder 2, **dadurch gekennzeichnet, dass** das Sicherheitsmerkmal (500) an der Kante (112) zumindest abschnittsweise ein kodiertes Muster (504) umfasst.

4. Wert- oder Sicherheitsdokument (100) nach einem der Ansprüche 1 bis 3, **dadurch gekennzeichnet, dass** das Sicherheitsmerkmal (500) einen ohne technische Hilfsmittel erfassbaren Bereich mit niedrigem Sicherheitsgrad in einer Richtung senkrecht bezüglich der Stapelrichtung (110) aufweist, und dass das Sicherheitsmerkmal (500) einen nicht ohne Hilfsmittel erfassbaren, gegenüber dem Bereich mit niedrigem Sicherheitsgrad stärker gesicherten Bereich mit hohem Sicherheitsgrad in einer Richtung in oder entgegen der Stapelrichtung (110) aufweist.

5. Wert- oder Sicherheitsdokument (100) nach einem der Ansprüche 1 bis 4, **dadurch gekennzeichnet, dass** das Sicherheitsmerkmal (500) ausgebildet ist, durch Bestrahlung der Unterseite (102) und/oder der Oberseite (106) mittels Röntgenstrahlen erfasst zu werden.

6. Verfahren zur Herstellung eines Wert- oder Sicherheitsdokuments (100) nach einem der Ansprüche 1 bis 5, **gekennzeichnet durch** die Schritte:
A) Bereitstellen einer eine Unterseite (102) bildenden Trägerschicht (104),
B) Bereitstellen einer eine Oberseite (106) bildenden Deckschicht (108),
C) Aufbringen oder Einbringen einer Beschichtung (114) für mindestens ein Sicherheitsmerkmal (500) zwischen die Trägerschicht (104) und die Deckschicht (108),
wobei die das Sicherheitsmerkmal (500) bildende Beschichtung (114) in eine oder auf eine Zwischenschicht (116) zwischen der Trägerschicht (104) und der Deckschicht (108) aufgebracht oder eingebracht wird, wobei in der oder auf der Zwischenschicht (116) eine Antennenspule (202) aufgebracht wird oder wurde,
wobei die Antennenspule (202) aus demselben Material wie die Beschichtung (114) besteht, und wobei die Antennenspule (202) in zusammen mit der Beschichtung (114) gedruckt wird,
D) Herausbilden des sich bis an mindestens eine Kante (112) des Wert- oder Sicherheitsdokuments (100) erstreckenden und an der Kante (112) erfassbaren Sicherheitsmerkmals (500) durch Ablängen der in einer Stapelrichtung (110) gestapelten und/oder laminierten Schichten (104, 108) auf ein vorgegebenes oder vorgebbares Endmaß (118) des Wert- oder Sicherheitsdokuments (100).

7. Verfahren nach Anspruch 6, **dadurch gekennzeichnet, dass** das Sicherheitsmerkmal (500) herausgebildet wird, durch ein Stanzen der Schichten (104, 108) auf das Endmaß (118), wodurch das Sicherheitsmerkmal (500) an der Kante (112) freigelegt wird.

8. Verfahren nach Anspruch 6 oder 7, **dadurch gekennzeichnet, dass** die Antennenspule (202) und die das Sicherheitsmerkmal (500) bildende Beschichtung (114) mittels einer Druckeinrichtung gedruckt werden.

## Claims

1. A value or security document (100) with a carrier layer (104) forming a lower side (102), with a cover layer (108) forming an upper side (106), and with at least one edge (112) formed from the layers (104, 108) stacked in a stacking direction (110), at which edge at least one security feature (500) is arranged or formed, wherein the security feature (500), which can be detected at the edge (112), is formed from a coating (114) which extends at least in sections to the edge (112) and is introduced between the carrier layer (104) and the cover layer (108),
wherein the coating (114) is introduced into or applied to an intermediate layer (116) between the carrier layer (104) and the cover layer (108), in which or on which an antenna coil (202) is present, **characterized in that** the antenna coil (202) consists of the same material as the coating (114).

2. The value or security document (100) according of claim 1, wherein the security feature (500) comprises a regular pattern (502) at least in sections at the edge (112).

3. The value or security document (100) according to claim 1 or 2, wherein the security feature (500) comprises a coded pattern (504) at least in sections at the edge (112).

4. The value or security document (100) according to any one of claims 1 to 3, wherein the security feature (500) has a low security degree region detectable without technical aids in a direction perpendicular with respect to the stacking direction (110), and in that the security feature (500) has a high security degree region detectable not without aids and more strongly secured with respect to the low security degree region in a direction in or against the stacking direction (110).

5. The value or security document (100) according to any one of claims 1 to 4, wherein the security feature (500) is adapted to be detected by irradiating the lower side (102) and/or the upper side (106) with X-rays.

6. A method of producing a value or security document (100) according to any one of claims 1 to 5, **characterized by** the steps of:
A) providing a carrier layer (104) forming a lower side (102),
B) providing a cover layer (108) forming an upper side (106),
C) applying or inserting a coating (114) for at least one security feature (500) between the carrier layer (104) and the cover layer (108),
wherein the coating (114) forming the security feature (500) is applied or introduced into or onto an intermediate layer (116) between the carrier layer (104) and the cover layer (108),
wherein an antenna coil (202) is or has been applied in or on the intermediate layer (116),
wherein the antenna coil (202) is made of the same material as the coating (114), and wherein the antenna coil (202) is printed in together with the coating (114),
D) forming the security feature (500) extending to at least one edge (112) of the value or security document (100) and detectable at the edge (112) by cutting the layers (104, 108) stacked and/or laminated in a stacking direction (110) to a predetermined or predeterminable final dimension (118) of the value or security document (100).

7. The method according to claim 6, wherein the security feature (500) is formed out by punching the layers (104, 108) to the final dimension (118), thereby exposing the security feature (500) at the edge (112).

8. The method according to claim 6 or 7, wherein the antenna coil (202) and the coating (114) forming the security feature (500) are printed by means of a printing device.

## Revendications

1. Document de valeur ou de sécurité (100) avec une couche porteuse (104) formant un côté inférieur (102), avec une couche de recouvrement (108) formant un côté supérieur (106), ainsi qu'avec au moins une arête (112) formée à partir des couches (104, 108) empilées dans un sens d'empilement (110), au niveau de laquelle au moins une caractéristique de sécurité (500) est agencée ou réalisée, dans lequel la caractéristique de sécurité (500) détectable au niveau de l'arête (112) est formée à partir d'un revêtement (114) s'étendant au moins par sections jusqu'à l'arête (112), introduit entre la couche porteuse (104) et la couche de recouvrement (108),
dans lequel le revêtement (114) est introduit ou appliqué dans une ou sur une couche intermédiaire (116) entre la couche porteuse (104) et la couche de recouvrement (108), dans lequel ou sur lequel une bobine d'antenne (202) se présente, **caractérisé en ce que** la bobine d'antenne (202) se compose du même matériau que le revêtement (114)..

2. Document de valeur ou de sécurité (100) selon la revendication 1, **caractérisé en ce que** la caractéristique de sécurité (500) au niveau de l'arête (112) comporte au moins par sections un motif régulier (502).

3. Document de valeur ou de sécurité (100) selon la revendication 1 ou 2, **caractérisé en ce que** la caractéristique de sécurité (500) au niveau de l'arête (112) comporte au moins par sections un motif codé (504).

4. Document de valeur ou de sécurité (100) selon l'une quelconque des revendications 1 à 3, **caractérisé en ce que** la caractéristique de sécurité (500) présente une zone détectable sans moyen auxiliaire technique avec un degré de sécurité faible dans un sens perpendiculaire au sens d'empilement (110), et que la caractéristique de sécurité (500) présente une zone non détectable sans moyen auxiliaire, protégée plus fortement par rapport à la zone avec le degré de sécurité faible avec un haut degré de sécurité dans un sens dans ou dans le sens inverse au sens d'empilement (110).

5. Document de valeur ou de sécurité (100) selon l'une quelconque des revendications 1 à 4, **caractérisé en ce que** la caractéristique de sécurité (500) est réalisée afin d'être détectée par rayonnement du côté inférieur (102) et/ou du côté supérieur (106) au moyen de rayons X.

6. Procédé de fabrication d'un document de valeur ou de sécurité (100) selon l'une quelconque des revendications 1 à 5, **caractérisé par** les étapes:
A) la fourniture d'une couche porteuse (104) formant un côté inférieur (102),
B) la fourniture d'une couche de recouvrement (108) formant un côté supérieur (106),
C) l'application ou l'introduction d'un revêtement (114) pour au moins une caractéristique de sécurité (500) entre la couche porteuse (104) et la couche de recouvrement (108),
dans lequel le revêtement (114) formant la caractéristique de sécurité (500) est appliqué ou introduit dans une ou sur une couche intermédiaire (116) entre la couche porteuse (104) et la couche de recouvrement (108), dans lequel une bobine d'antenne (202) est ou a été appliquée dans la ou sur la couche intermédiaire (116),
dans lequel la bobine d'antenne (202) se compose du même matériau que le revêtement (114), et dans lequel la bobine d'antenne (202) est imprimée conjointement avec le revêtement (114),
D) la formation de la caractéristique de sécurité (500) s'étendant jusqu'à au moins une arête (112) du document de valeur ou de sécurité (100) et détectable au niveau de l'arête (112) par la coupe en longueur des couches (104, 108) laminées et/ou empilées dans un sens d'empilage (110) à une mesure finale (118) prescrite ou prédéfinissable du document de valeur ou de sécurité (100).

7. Procédé selon la revendication 6, **caractérisé en ce que** la caractéristique de sécurité (500) est formée par un estampage des couches (104, 108) sur la mesure finale (118), par quoi la caractéristique de sécurité (500) est exposée au niveau de l'arête (112).

8. Procédé selon la revendication 6 ou 7, **caractérisé en ce que** la bobine d'antenne (202) et le revêtement (114) formant la caractéristique de sécurité (500) sont imprimés au moyen d'un dispositif d'impression.
